# EUROPEAN PATENT APPLICATION

(11) **EP 1 746 798 A1**
(43) Date of publication of application: **24.01.2007**
(21) Application number: 05291549.3
(22) Date of filing: 19.07.2005
(51) Int. Cl.: H04L 29/06

(54) **A personal token for reliable GBA-U authentication**

(71) Applicant: Axalto S.A., 92120 Montrouge (FR)
(72) Inventor: Seif, Jacques, C/o Axalto S.A., 92120 Montrouge (FR)
(74) Representative: Jacquot, Ludovic R. G.

(57) **Abstract**

The invention relates to a personal token (PT) for a hosting telecommunication terminal (T) such personal token (PT) storing a secret master key and comprising a microprocessor and a software equipment for interpreting at least one incoming command so as to generate first derived key material on the basis of the stored secret master key and on the basis of the content of said incoming at least one command, said software equipment controlling interpretation of said command so as to determine whether said command indicates that the first derived key material should be delivered to the hosting terminal (T) or not, characterized in that the software equipment performs a checking task as to whether the command comprises a content which complies with a predetermined content format and refuses to proceed to delivery of the first derived key material in case said content does not comply with said content format.

## Description

The invention relates to GBA-U procedure for generating derived keys in a personal token hosted in a terminal inside a telecommunication network such as a mobile phone network. The invention relates in particular but non exclusively to Internet Protocol (IP) authentication in mobile telecommunication networks. Mobile IP authentication is one of the invention's applications.

GBA-U procedure is aimed at allowing an additional generation of a series of keys by the token. GBA-U indeed requires a larger set of derived keys, hence the second derivation of keys on the basis of first derived keys or derived key material, namely the MN-AAA authenticator.

On the contrary, basis network security pertains to services such as voice on the phone network or basis data transmitting onto PDAs in a mobile data network which directly use the first derived key material (MN-AAA authenticator) for fueling the cryptographic tools. Basis network security typically does not require new key derivations on the basis of the first derived key material.

The GBA-U additional derived keys - or service keys - are typically the internal and external NAF-specific keys , respectively noted Ks_ext_NAF and Ks_int_NAF.

The internal NAF-specific key Ks_int_NAF is used for establishing a secure channel between a personal token hosted in a terminal and a remote server through the terminal HT but said channel remaining hidden from said terminal.

The external NAF-specific key Ks_ext_NAF is used for establishing a secure channel between the hosting terminal and a remote server.

Those NAF specific keys are themselves derived from the first derived key material which first derived key material is itself derived from the secret master key K which is stored inside the personal token and also inside the remote server.

Those NAF specific keys are therefore dedicated to specific service channels afterwards, for example for broadcasting TV or video programs over the mobile terminals, using specific channels.

The personal tokens currently proposed are able to behave both according to basis network authentication and according to GBA-U.

A main difference between basis and GBA-U behavior of the personal token is that the first derived key material must be kept secret inside the token according to GBA-U whereas the token discloses them to the mobile terminal according to the basis network authentication.

The main reason why the first derived key material is disclosed to the terminal in basis security scheme whereas not in the GBA-U is that this first derived key material is the very material that fuels the cryptography tools of the mobile terminal in the basis authentication scheme, which is not the case in GBA-U due to the fact that this first derived key material is specifically used for generating at least one derived key which must remain hidden from the mobile terminal. Hence this first derived key material becomes the material which is used for creating additional keys, some of which remain hidden to the terminal, therefore it becomes important that the first derived key material remains secret to the terminal.

Otherwise the first derived key material may be used by a malicious software in the terminal to derive the service keys and thereby use such service keys for unduly benefiting from the GBA service outside of the card, for example for sharing broadcasted programs with non authorized terminals.

It is therefore a main concern to discriminate between a GBA-U command and a basis network authentication command when received by the personal token so that the personal token knows whether it must or should not disclose the first derived key material to the terminal.

That is why a flag area has been provided in the authentication commands that may be sent to the token, which flag indicates whether the command is aimed at triggering a basis network authentication or a GBA-U authentication.

As a reminder, it is also well known that the remote server generates and includes a random value RAND1 in the authentication command, which is used by the token for computing the first derived key material on the basis of the stored secret master key K.

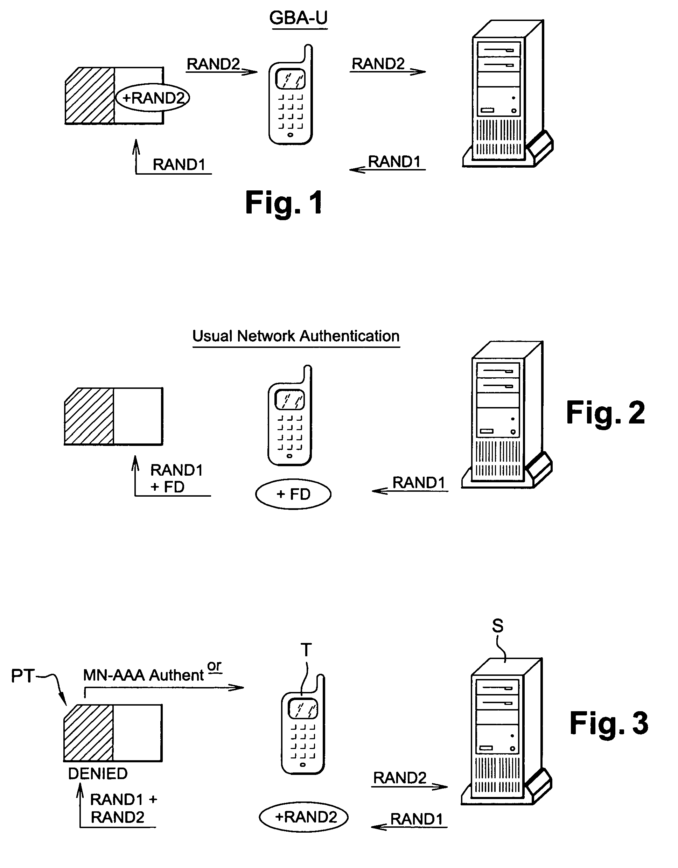

When receiving a command indicating a GBA-U context through the dedicated flag (figure 1), the token PT first generates an additional random number RAND2 which is also used for computing the first derived key material, and then sends this RAND2 value back to the remote server so that the remote server can itself compute the value of the first derived key material on the basis of the same parameters K, RAND1, and RAND2.

On the contrary, when a basis authentication request is sent by the remote server (figure 2), such basis command is first processed by the hosting terminal which includes into it some new data FD which have a specific format. Those data will be called the Formatted Data in the following.

Such command for basis authentication, now comprising the flag indicating the basis authentication, the RAND1 value as generated by the remote server, and the formatted data FD as generated by the hosting terminal, is received by the token PT. A specific part of the software equipment of the token PT, which specific part is dedicated to basis network authentication, then processes the authentication command, sends a result value to the remote server, and generates the first derived key material on the basis of the RAND value, the formatted data and the main secret key K as kept secret in the token PT. The derived key material is then delivered out of the token PT to the hosting terminal as due according to the basis network authentication scheme.

The aim of the invention is to prevent a malicious mobile phone from proceeding to a "man in the middle" malicious attack, i.e. to induce the personal token into disclosing the first derived key material by transforming a GBA-U authentication command into a seemingly basis network authentication command, i.e. change the flag of an authentication command to the token and simultaneously provide the remote server with a fake RAND2 value generated by the mobile in place of the token (figure 3) so that the remote server doesn't notice that the GBA-U command has been disguised into a basis network authentication command onto the side of the token.

This aim is achieved by means of the invention thanks to the devices and methods as recited in the appended claims.

Other purposes, features and advantages of the invention will appear on reading the description which follows of a preferred implementation of the invention and of an embodiment of a system designed for this implementation, given as a non-limiting example, and referring to the attached drawings in which:
- figure 1 is a schematic view of different steps of a known GBA-U authentication procedure ;
- figure 2 is a schematic view of different steps of a known basis network authentication procedure ;
- figure 3 is a schematic view of different steps of a method according to the invention for a response to a first type of attack on the token ;
- figure 4 is a schematic view of different steps of a method according to the invention for a response to a second type or enhanced attack on the token ;
- figure 5 represents a formatted data part which is interpreted in connection with the described embodiments of the invention

Let's say that as depicted on figure 3 a hosting terminal T receives a GBA-U request directed to the token PT so as to trigger therein a GBA-U authenticating request, which authentication request is also intended to trigger first derived key material generation in the token PT.

This first derived key material would be based on the master secret key K of the token PT, on the value of a transmitted random value RAND1 as generated by the remote server S, and on the value of an additional random value RAND2 as generated by the token PT.

The hosting terminal T decides to trigger the token PT in a fake way so that the token PT reacts by disclosing to the mobile terminal T the first derived key MN-AAA Authenticator it has created, thereby unduly allowing the mobile terminal T to independently handle or transmit rights to others for some service which was initially restricted to presence of the specific token PT.

The mobile terminal T thereby disguises said GBA-U authentication command into a basis network authentication command, in the present example by changing the flag parameter which is known for basisly discriminating between basis and GBA-U authentication.

The mobile terminal T may also perform some additional alteration of the authentication command, such as formally rename the command itself. For example, an original GBA-U command which is named "COMPUTE GBA-U" may be renamed by the malicious terminal T as "COMPUTE _IP".

Such "man-in-the-middle" attack from the mobile terminal T also requires that the remote server S be satisfied as to reception of the additional random value RAND2.

Due to the fact that the token PT is not about to generate such RAND2 part because it is going to be maliciously triggered according to the basis authentication scheme, the mobile terminal T maliciously generates a random value RAND2 and sends it back to the remote server S as though such RAND2 value had been produced by the token PT.

The malicious command according to the basis authentication scheme which is sent to the token PT must also appear to the token PT having a proper content, i.e. being incorporated with additional data in place FD that the mobile terminal T introduces in such case.

Let's assume that the mobile terminal T is going to introduce the same RAND2 data it has just generated for the attention of the remote server S in lieu of the FD formatted data as expected by the token PT in case of the basis authentication data.

The present token PT is equipped with a software denial tool which reads such FD data and checks whether some expected format requirements are present of not inside such FD formatted data.

In case such expected and checked predetermined format requirements are not complied with by the maliciously introduced data in place of FD, the software equipment identifies the malicious attack and initiated abortion of the authentication process.

The first derived key material is therefore not computed by the token PT and therefore not disclosed to the mobile terminal T.

Therefore, when the malicious terminal T also introduces a necessary additional parameter into the fake command so as said command seems to be a real basis authentication command to the token PT but the additional parameter is the transmitted random value RAND2 which is sent to the remote server S, then the personal token PT identifies that such additionnal parameter is a random value generated by the terminal T with no specific format and therefore the token PT refuses such additional value as being a fake one.

It may be noted that the present description is made in a simplified way for the sake of clarity. Some exchanges for example between the mobile terminal T and the personal token PT may be made throughout a plurality of commands in lieu of a single command, as well known in the art.

For instance the mobile terminal T may transmit the random value RAND2 as a fake formatted data FD as well as the random value RAND1 to the personal token PT throughout several subsequent commands.

Similarly, what is referred to as the remote server may be replaced by a plurality of servers, typically two servers i.e. an authentication server and a secure server with.

The authentication server then communicates with the secure server in which secure server the secret master key K is kept.

The first derived key material is referred to as the first derived one as opposite to the NAF keys which are derived from the first derived key material and could therefore be referred to as the second derived key material. It should be understood that any intermediary level of derivation may be present up or down from the first derived key material, and/or up and down from the NAF keys.

The first derived key material may have any shape. It may for example be constituted by two keys which are concatenated so as to constitute a single key.

A prior art token would have interpreted such seemingly basis authentication command as a true one, computed the first derived key material on the basis of RAND1 and RAND2 and disclosed the keys to the terminal T while the remote server S would have also computed MN-AAA Authenticator on the basis of the same values RAND1 and RAND2 and therefore provided the GBA service to the mobile terminal T unduly enabled to decrypt alone such GBA service.

However, thanks to the present token PT such a fake basis authentication command is identified because of the non formatted aspect of the additional data introduced by the mobile.

The token PT reads the said additional parameters at particular parts thereof which particularly reflect the due format and checks whether said particular parts correspond to the expected format according to the basis network authentication scheme.

The formatted data FD are normally a concatenation of typically four parts, each of these four parts being divided into three fields. Those three fields are respectively a tag field, a length field and and a content field which includes the values constituting what is considered as the content of the considered part, hence the "TLV" name of such a structure.

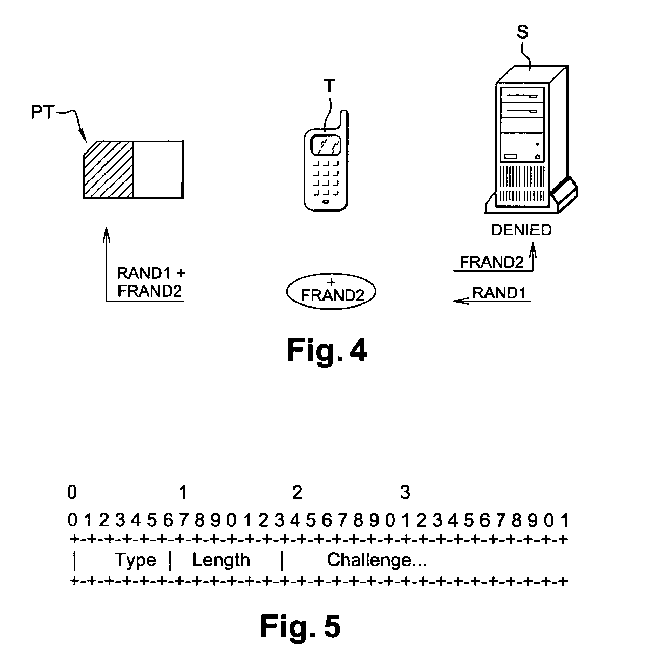

A typical TLV structure of a considered part is represented on figure 5.

As checking tasks, the protection software equipment of the token PT first controls reading the content of the "T" or "tag" field of each part.

Location of such "T" fields is first determined by the software equipment through counting a number of bytes in order to come to the proper location where the tag value is expected to be.

The software equipment then reads the content of such tag field. A value of 132 must typically be found in such field, which is a typical mandatory value in a basis basis network authentication command. Should this value of 132 be found as such place, then the software equipment of the token PT concludes that the first requirement is complied with.

Another step of format checking is carried out which consists in checking the length of the whole additional data FD.

Such step consists in counting the whole size of the possibly fake data, and reading in the "L" or "length" fields of the data the values stored thereby.

The software equipment adds the "length" values read at the corresponding locations and stores the result of the addition of such length values. Then the software equipment counts the number of bytes effectively constituting the FD data and compares the added length with the counted length. Should these two results match each other, then the second format requirement is established as complied with by the software equipment of the token PT.

Any other similar format checking may be carried out by the token PT.

For example, another format checking may consist in checking that the formatted data has a predetermined fixed length. Another format checking may be that the formatted data has, on the contrary, a length which differs from a fixed predetermined length, which fixed predetermined length would be the typical length of a random value RAND2 used in GBA-U process.

Should one of these requirement checkings be not successful, then the token PT aborts the authentication process, computing no first derived key material nor sending any answer to the mobile terminal T nor the remote server S. Thus the first derived key material is not delivered to the hosting terminal T.

Alternatively, abortion of the authentication process may occur once the first derived key material has been computed. In that case the first derived key material is not delivered to the hosting terminal T either.

It shall be noted that the described format checking allows to discriminate between basis authentication and GBA-U authentication independently of the existence of the dedicated flag which may therefore be suppressed in an alternate embodiment.

The basis network authentication method is for example Mobile IP authentication

Another scenario of an attempted attack onto the token will now be described in reference to figure 4.

Such attack is an enhanced attack in which the malicious mobile terminal T generates a random value RAND2 that it disguises into a formatted data element FD, i.e. whereby the terminal T introduces some format features into the fake FD data.

For that matter the mobile terminal T generates a real random value which it then processes so as to alter certain parts thereof, thereby rendering such random value compliant with the format requirements that the token PT is about to check.

The mobile terminal T therefore produces a random value RAND2 that truly becomes a formatted data FD in the sense that is expected by the token PT, i.e. a random value that can not be identified by the token PT as a random but which is fakely identified by the token PT as the result of the basis process performed by the mobile terminal T in the frame of the basis authentication process.

However, in the present case as for the previous one, the mobile terminal T disguises a GBA-U request originating from the server S into a basis authentication request so that the result of the first derived key material computation is unduly delivered to the terminal T. To this end, the corresponding flag is also changed by the terminal T and the name of the command also before transmitting the command to the token PT.

The token PT thereby receives the fake basis authentication command, doesn't identify it as a fake one, and generates the first derived key material and delivers them to the mobile terminal T.

The mobile terminal T meanwhile transmits the fakely formatted RAND 2 to the remote server S, so that the remote server S uses such RAND2 for performing the same first derived key material computation for later communication with the terminal T and the token PT exclusively with the second derived key material as derived from the first derived key material, for what the server S believes to be a protected channel with the token PT and/or the terminal T exclusively.

A prior art server may therefore consider the RAND2 value as a true random value and therefore perform the expected tasks in the frame of the GBA-U scheme.

The present remote server S however includes a software equipment which identifies a fake random value RAND2, i.e. a RAND2 value into which the mobile terminal T managed a formatted aspect.

The software equipment checks whether said particular parts correspond to the format expected by the token PT. To this end, this software equipment reads the RAND2 value at particular parts thereof which are likely to particularly reflect the unduly managed format.

Such checked particular parts of the RAND2 value are some parts that reflect either the basis format which the remote server S specifically considers as significant, or parts which reflect the technical expectation of the token PT, i.e. the parts which are checked by the token PT so as to accept or not such FD data as formatted or not.

In this last case, which is the preferred embodiment, the remote server S therefore performs a checking which is exactly the same as the one which has been performed by the token PT. The decision drawn by software equipment of the remote server S is exactly the opposite as the conclusion drawn by the software equipment of the token PT : if the RAND2 value appears to comply with the predetermined format, then this is interpreted by the software equipment of the remote server S as an attack.

Indeed the remote server S expects a real random value in response to a GBA-U request is has previously sent, and not a formatted data which may only appear in case of a basis network authentication request.

The software equipment of the remote server S therefore executes the following tasks in order to identify such an attack onto the token PT that the token PT may itself not have identified.

The unduly formatted RAND2 value may be a concatenation of typically four parts, each of these four parts being divided into three fields. Those three fields are respectively a tag field "T", a length field "L" and a field "V" which includes the values constituting the content of the considered part, hence the "TLV" name of such structure.

A typical TLV structure of a considered part is represented on figure 5.

The checking task of the software equipment of the remote server S includes reading the data which are present at the "T" or "tag" field of each part.

A true random value RAND2 should include no particular tag value at these locations.

Location of such "T" fields is first determined by the software through counting a number of bytes in order to come to the proper location where the tag value is likely to unduly appear.

The software equipment then reads the content of such field. A value of 132 may be unduly found in such "T" field, which is a typical mandatory value in a basis network authentication command. Should this value of 132 be found as such place, then the software equipment concludes that the RAND2 value is an unduly processed value which has specifically been shaped for being accepted by the token PT, i.e. fooling the token.

In such case the remote server S aborts the authentication process, i.e. doesn't proceed to computation of the first derived key material nor any of the NAF keys (second derived key material) and doesn't provide the GBA service to the particular token PT an terminal T which host the attack.

Should such first checking be successful, i.e. should the checking of the likely "T" fields of RAND2 reveal no predetermined value, then a second checking step is carried out.

This second step of non-format checking consists in checking the length of whole RAND2 value.

Such second checking step consists in counting the whole size of RAND2, and reading in the possible "L" ("length") fields of the RAND2 value.

The software equipment of the remote server S adds the length values read at the corresponding field locations in RAND2 and stores the result of such addition.

Then the software equipment of the remote server S counts the number of bytes constituting RAND2 and compares the added length value with the counted length value. Should these two values match each other, then the software equipment of the remote server S has identified an undue format in the received RAND2 value, i.e. compliance of the RAND2 value with a format which requires indication of length at given locations.

Should this second checking step reveal that an undue format is present, then the remote server S aborts the authentication process.

Such second checking and any other checking may be necessary as far as many type of attacks may appear which may be directed at fooling different types of personal tokens, i.e. tokens which may implement different types of format checking of the kind previously described.

For example, another format checking may consist in checking whether the the received data which is expected as a true random value has a predetermined fixed length.

In an embodiment where the formatted data as expected by the token has a predetermined length, then such predetermined length of the random would reveal that the random is a fake one as being formatted.

In an embodiment where the formatted data as expected by the card should have a length which differs from a predetermined length i.e. the typical length of a random, then a received random which indeed would have such a differing length should be considered as fake because unduly formatted so as to comply with the requirements of the card.

The present format checking implemented by the remote server may preferably be the same as the one which is implemented by the token if any, because in this way an attack which will intend to fool the token, i.e. an attack which includes the specific format requirements checked by the token so that the token accepts it, is directly identified by the remote server due to such format requirements being specifically checked by the remote server.

The format requirements which will make the token believe in a basis authentication command will be directly revealed to the equipped remote server who knows by himself that the present authentication is a GBA-U one, and therefore that the particular format should not appear in the random value RAND2, i.e. the random value which is expected to originate from the token and not from the mobile terminal.

In other words, the terminal can not actuate the token in the basis authentication scheme while actuating the server in the GBA-U authentication scheme. Actually the token would require a true formatted data whereas the server would require a true random value, which is contradictory for the terminal to manage.

The described personal token is not limited to the case of a smart card or a SIM or R-UIM card (removable user identity module). It may be any type of other token authenticating its holder, for example a USB stick or a mass memory authenticating token.

## Claims

1. A personal token (PT) for a hosting telecommunication terminal (T) such personal token (PT) storing a secret master key and comprising a microprocessor and a software equipment for interpreting at least one incoming command so as to generate first derived key material on the basis of the stored secret master key and on the basis of the content of said incoming at least one command, said software equipment controlling interpretation of said command so as to determine whether said command indicates that the first derived key material should be delivered to the hosting terminal (T) or not, **characterized in that** the software equipment performs a checking task as to whether the command comprises a content which complies with a predetermined content format and refuses to proceed to delivery of the first derived key material in case said content does not comply with said content format.

2. The personal token (PT) according to claim 1, **characterized in that** it comprises a piece of software for controlling generation of at least two second derived keys on the basis of the first derived key material and using such two second derived keys for creating respectively a secure channel between the personal token (PT) and a remote server (S) S and a secure channel between the hosting terminal (T) and the remote server (S) S.

3. The personal token (PT) according to anyone of the previous claims, **characterized in that** the token (PT) is enabled for both a basis service authentication process and a GBA-U authentication process and the token (PT) transmits the first derived key material to the terminal (T) or not according to the command being respectively a basis service authentication command or a GBA-U authentication command.

4. The personal token (PT) according to the preceding claim, **characterized in that** the said at least one format requirement which is checked by the token (PT) pertains to format requirements which use to be complied with in the case of data which are added to the command by the terminal (T) according to the basis service authentication process and which use to not be complied with according to the GBA-U authentication process.

5. The personal token (PT) according to anyone of the previous claims, **characterized in that** the checking task comprises reading a value stored at a specific "tag" location in a "TLV" format of a given part of the incoming command and comparing said value with a predetermined value thereby identifying that a format requirement is complied with in case the predetermined value is read at said location of the command.

6. The personal token (PT) according to anyone of the previous claims, **characterized in that** the checking task comprises reading length values at different predetermined locations in the incoming command, adding such values, counting the length of a given part of the incoming command and comparing the counted length value with the added length value thereby identifying that a format requirement is complied with in case the two values match each other.

7. The personal token according to anyone of the previous claims, **characterized in that** the checking task comprises assessing the length of a given part of the incoming command and identifying that a format requirement is complied with in case the assessed length equals a predetermined length.

8. The personal token according to anyone of claims 1 to 6, **characterized in that** the checking task comprises assessing the length of a given part of the incoming command and identifying that a format requirement is complied with in case the assessed length is different from a predetermined length.

9. The personal token (PT) according to anyone of the previous claims, **characterized in that** the personal token (PT) is a smart card.

10. The personal token (PT) according to anyone of the previous claims, **characterized in that** the personal token (PT) is a mobile telecommunications personal token (PT).

11. The personal token (PT) according to claim 1, **characterized in that** the software equipment of the token (PT) identifies whether the incoming command indicates that the first derived key material should be delivered to the hosting telecommunication terminal (T) or not by reading a specific flag of the command and refuses to deliver first derived key material to the terminal (T) in case the flag indicates that the derived key material should be delivered to the terminal (T) whereas the content part of the command does not comply with the said at least one format requirement.

12. An assembly comprising a remote server(s) entity (S), at least one telecommunication terminal (T), and a personal token (PT) according to anyone of claims 1 to 9, the remote server(s) entity (S) comprising authentication software equipment for generating a first random value and sending such random value to said personal token (PT) through said at least one mobile terminal (T), said piece of software of the remote terminal (T) performing reception of an additional random value generated by the token (PT) and performing generation of first derived key material on the basis of both the first random value and the additional random value and on the basis of a master secret key stored in said remote server(s) entity (S), said piece of software of the remote server(s) entity (S) performing generation of second derived key material on the basis of the first derived key material, the assembly being **characterized in that** the piece of software of the remote server(s) entity (S) performs a checking operation onto the received additional random value so as to identify whether said additional random value complies with at least a predetermined format requirement and said piece of software aborts authentication when the received additional random value complies with the said at least one predetermined format requirement.

13. The assembly according to the preceding claim, **characterized in that** the piece of software of the remote server(s) entity (S) performs the similar format checking task onto the received additional random value as the checking task that the token (PT) performs onto said part of the content of the authentication command, the remote server aborting authentication when the said at least one format requirement is specifically present onto the received additional random value whereas the token (PT) refuses delivery of first derived key material when the said at least one format requirement is not present onto the incoming command.

14. The assembly according to claim 12 or claim 13, **characterized in that** the remote server(s) entity (S) comprises a GBA-U server.

15. The assembly according to anyone of claims 12 to 14, **characterized in that** the remote server(s) entity (S) performs the preliminary step which consists in identifying whether the token (PT) is GBA-U capable and launches the checking task onto the received second random value in case the token (PT) is GBA-U capable.
